# EUROPÄISCHE PATENTSCHRIFT

(11) **EP 2 361 446 B1**
(45) Veröffentlichungstag und Bekanntmachung des Hinweises auf die Patenterteilung: **02.01.2013**
(21) Anmeldenummer: 09751934.2
(22) Anmeldetag: 16.11.2009
(51) Int. Cl.: H01M 8/06, H01M 8/00, F17D 1/04

(54) **VERFAHREN ZUR NUTZUNG VON WASSERSTOFF MITTELS BRENNSTOFFZELLEN AN EINEM ROHRNETZ**
METHOD FOR USE OF HYDROGEN BY MEANS OF FUEL CELLS ON A PIPE NETWORK
PROCÉDÉ D'EXPLOITATION D'HYDROGÈNE À L'AIDE DE PILES À COMBUSTIBLE SUR UN RÉSEAU TUBULAIRE

(30) Priorität: 17.11.2008 DE 102008057694
(43) Veröffentlichungstag der Anmeldung: 31.08.2011
(73) Patentinhaber: Tetzlaff, Karl-Heinz, 65779 Kelkheim (DE)
(72) Erfinder: Tetzlaff, Karl-Heinz, 65779 Kelkheim (DE)
(74) Vertreter: Kapfenberger, Jochen
(86) Internationale Anmeldenummer: PCT/EP2009/065224
(87) Internationale Veröffentlichungsnummer: WO 2010/055156

(56) Entgegenhaltungen:
- EP-A2- 1 256 544
- HAMELMANN ET AL: "Studie zur Dämpfung der Netzbelastung durch Wasserstoffsysteme" FACHHOCHSCHULE LÜBECK PROJEKT-GMBH,, 1. Juli 2007 (2007-07-01), Seiten 1-81, XP009129351 in der Anmeldung erwähnt
- A. Dauensteiner: "European Virtual Fuel Cell Power Plant" 5th Framework Programme of the European Comission 11. Mai 2005 (2005-05-11), XP002568028 Gefunden im Internet: URL:http://www.initiative-brennstoffzelle. de/ibz_neu/live/menu_ibz/ibz_pilotprojekte /pilot_feldtest/feldtest_download/psfile/p dfde/39/EUVPP_Mana4948ea4c7636d.pdf>
- Karl-Heinz Tetzlaff: "Wasserstoff aus Biomasse und Wind" Projektwerkstatt WindWasserstoff BSH, Hamburg 20. April 2008 (2008-04-20), XP002568029 Gefunden im Internet: URL:http://www.bio-wasserstoff.de/pdf/Hamb urg2008.pdf>

## Beschreibung

Die Erfindung betrifft ein Verfahren und eine Vorrichtung jeweils zur Nutzung von über ein abgegrenztes Rohrnetz bereitgestelltem Wasserstoff mittels bei Endverbrauchern vorgesehenen Brennstoffzellen.

Brennstoffzellen mit Polymerelektrolytmembranen werden heute im Erdgasnetz so betrieben, dass jeder einzelnen Brennstoffzelle ein Reformer vorgeschaltet ist. Das ist ineffizient und teuer. Die bekannten Einheiten aus Reformer und Brennstoffzelle können den hochdynamischen Bedarfsanforderungen des Endverbrauchers nicht folgen, so dass der Endverbraucher zur Energieversorgung zusätzlich auf das allgemeine Stromnetz angewiesen ist. Eine typische Einheit aus Reformer und Brennstoffzelle ist in der DE 199 51 215 A1 beschrieben.

Für den Betrieb von Brennstoffzellen mit Erdgas muss zunächst im Reformer ein wasserstoffhaltiges Synthesegas erzeugt werden. Da dieses Synthesegas noch eine Vielzahl von Inhaltsstoffen aufweist, die die Katalysatoren im Reformer und der Brennstoffzelle vergiften (Störkomponenten), muss das Synthesegas vor der Verstromung in der Brennstoffzelle auf Brennstoffzellenqualität gereinigt werden. Das wasserstoffhaltige Synthesegas aus dem Reformer muss also durch Gasreinigungsvorrichtungen auf Brennstoffzellenqualität gereinigt werden, damit die Brennstoffzelle nicht beschädigt wird. Neben Kohlenmonoxid (CO) und Sauerstoff (O₂) müssen insbesondere schwefelhaltige Verbindungen aus dem Synthesegas abgetrennt werden. Diese Problematik ist in der EP 1 926 169 A1 beschrieben. Für die Hausenergieversorgung mit wenigen Kilowatt Leistung führen die hohen Anforderungen der Brennstoffzellen an die Reinheit des wasserstoffhaltigen Gases zu hohen Investitionen.

Wenn ein Gebiet, etwa einer Stadt, über ein Rohrnetz mit Wasserstoff zur Erzeugung von Strom und Wärme versorgt werden soll, muss die Produktion von Wasserstoff vor allem dem Wärmebedarf folgen. Es muss also genügend Wasserstoff bereitgestellt werden, um den Wärmebedarf zu decken. Bei Fabriken, die Wasserstoff aus Biomasse produzieren, geht das nur mit großen, teuren Speichern wie Kavernenspeichern. Solche Speicher sind zwar in das Erdgasnetz integriert, stehen aber für ein Wasserstoffnetz zunächst nicht oder nur eingeschränkt zur Verfügung. Die finanziellen Hürden beim Übergang zu einer Wasserstoffwirtschaft sind demnach sehr hoch.

Die Fachhochschule Lübeck PROJEKT-GMBH hat im Juni 2007 in einer Studie mit dem Titel " Studie zur Dämpfung der Netzbelastung durch Wasserstoffsysteme" auf den Seiten 62, 63 und 71 die Zumischung von Wasserstoff in ein abgegrenztes Erdgasnetz und die Nutzung des Wasserstoffanteils in dezentralen Brennstoffzellen als theoretische Möglichkeit beschrieben, aber aus mehreren Gründen als nicht praktikabel verworfen. Die technische Durchführung wurde nicht offenbart.

In der EP 2 156 544 A2 wird der Betrieb von Brennstoffzellen an einem Erdgasnetz mit den Brennstoffzellen vorgeschalteten Erdgasreformern beschrieben.

Es ist Aufgabe der Erfindung, ein Verfahren und eine Vorrichtung jeweils der eingangs genannten und zuvor näher beschriebenen Art derart weiterzubilden und weiterzuentwickeln, dass die geschilderten Nachteile vermieden und Brennstoffzellen hochdynamisch und kostengünstig betrieben werden können. Es soll so zudem der Übergang von der heutigen stromgeführten Energiewirtschaft zu einer wärmegeführten, nachhaltigen Wasserstoffwirtschaft erleichtert werden.

Diese Aufgabe wird durch ein Verfahren gemäß Anspruch 1 gelöst.

Ferner wird die Aufgabe durch eine Vorrichtung gemäß Anspruch 9 gelost.

Erfindungsgemäß kann der Übergang hin zu einer Wasserstoffwirtschaft kostengünstiger realisiert werden, da der Wasserstoff vorwiegend für die Stromversorgung mittels Brennstoffzellen genutzt wird. Um die Wärmeversorgung, insbesondere im Winter, dennoch sicherzustellen, wird zusätzlich zum Wasserstoff gereinigtes Erdgas in das Rohrnetz eingespeist.

Als Erdgas wird ein gereinigtes Erdgas verwendet. Dies bedeutet, dass die Anteile der im Ergas enthaltenen Störkomponenten so gering sind, dass eine nennenswerte Schädigung der Brennstoffzellen durch das dem Rohrnetz entnommenen Gasgemisch vermieden wird. Andernfalls müssten bei den Endverbrauchern Gasreinigungseinrichtungen installiert werden, was aus Kostengründen vermieden werden soll. Aus dem gleichen Grund oder um den Anteil inerter Gase an dem durch das Rohrnetz transportierten Gasgemisch zu minimieren, wird Wasserstoff vorzugsweise in möglichst reiner Form in das Rohrnetz eingespeist. Minimale Verunreinigungen des Wasserstoffs können bedarfsweise je nach dem verwendeten Verfahren zur Herstellung von Wasserstoff aus Kostengründen toleriert werden.

Im Übrigen ist es zwar zweckmäßig aber nicht erforderlich, dass jeder Endverbraucher eine Brennstoffzelle und einen Gasbrenner mit dem über das Rohrnetz bereitgestellten Gas bzw. Gasgemisch betreibt. Es kann auch einzelne an das Rohrnetz angeschlossene Endverbraucher geben, die lediglich eine Brennstoffzelle oder einen Gasbrenner mit dem über das Rohrnetz bereitgestellten Gas bzw. Gasgemisch betreiben.

Die Brennstoffzelle und der Gasbrenner bei einem Endverbraucher sind so miteinander verschaltet und an das Rohrnetz angebunden, dass die Brennstoffzelle jedenfalls einen Teil des Wasserstoffs des Gasgemischs zur Erzeugung von Strom nutzt. Das erdgasreichere Abgas der Brennstoffzelle, das noch etwas Wasserstoff enthalten kann, wird vorzugsweise einem Gasbrenner eines Gaskessels zugeleitet. Das Gasgemisch wird vorzugsweise der Anode der Brennstoffzelle zugeführt. Daher wird auch vorzugsweise das an der Anode entweichende Abgas dem Gasbrenner zugeleitet. Denn typischerweise weist lediglich das Anodengas Wasserstoff und im vorliegenden Fall zusätzlich Erdgas auf. Das Kathodengas ist in der Regel vornehmlich Luft oder Sauerstoff sowie ggf. bei der Stromerzeugung entstehendes Wasser.

Als Brennstoffzellen bieten sich Polymerelektrolyt-Brennstoffzellen (PMFC) an, die auch dann problemlos Strom erzeugen können, wenn der Wasserstoffanteil am Gemisch aus Wasserstoff und Erdgas gering ist. Es können aber auch andere Brennstoffzellen wie Phosphorsaure Brennstoffzellen (PAFC), Schmelzkarbonat-Brennstoffzellen (MCFC) oder Festoxid-Brennstoffzellen (SOFC) verwendet werden. Bedarfsweise können auch mehrere der vorgenannten Brennstoffzellenarten gleichzeitig an das Rohrnetz angeschlossen sein.

Bei dem Rohrnetz kann es sich um ein neu gebautes Rohrnetz oder ein bestehendes Erdgasnetz handeln. Im Falle eines Erdgasnetzes handelt es sich insbesondere um einen räumlich abgegrenzten Teil eines bestehenden Erdgasnetzes. Die Größe des abgegrenzten Erdgasgebietes hängt ab von der Größe und Anzahl der Wasserstofffabriken und Wasserstoffspeicher, die für die abgegrenzte Erdgasversorgung bereitstehen.

In das Rohrnetz kann im Sommer bedarfsweise nur, insbesondere reiner, Wasserstoff eingespeist werden. Mittels der Brennstoffzellen können die Endverbraucher Strom und Warmwasser für den eigenen Bedarf erzeugen. Insbesondere im Winter kann neben dem Wasserstoff auch gereinigtes Erdgas in das Rohrnetz eingespeist werden. Der Erdgasanteil kann zur Sicherstellung der Wärmeversorgung mittels eines Gasbrenners genutzt werden.

Bei dem Gasbrenner handelt es sich vorzugsweise um einen sogenannten Universalbrenner, dessen Düse in der Lage ist, ein Gasgemisch mit einem Wasserstoffanteil von 0 bis 100% zu verbrennen. Dem Endverbraucher steht es frei, den Wasserstoff, beziehungsweise ein Gemisch aus Wasserstoff und Erdgas, allein zum Heizen im Gaskessel zu nutzen oder durch Vorschaltung einer Brennstoffzelle auch Strom zu erzeugen. Der Strom kann selbst genutzt, in das allgemeine Stromnetz eingespeist werden oder zur Deckung von eigenen Bedarfsspitzen aus dem allgemeinen Stromnetz bezogen werden.

Um Energieverluste zu vermeiden, ist es zweckmäßig, die vorgelagerte Wasserstofffabrik im Sommer mit Teillast und in der übrigen Zeit bei Volllast zu betreiben. Für die Abdeckung von Bedarfsspitzen an Wärme kann im Winter zusätzlich gereinigtes Erdgas in das Rohrnetz eingespeist werden. Bei Volllast der Wasserstofffabrik können dann erhebliche Strommengen in das allgemeine Stromnetz eingespeist werden, ohne dass die Abwärme aus der Brennstoffzelle verloren geht. Damit ist eine wärmegeführte Erzeugung von Strom und Wärme möglich, die definitionsgemäß verlustfrei ist. Die Wasserstofffabrik zur Bereitstellung des Wasserstoffs sollte für einen entsprechenden Betrieb des Rohrnetzes mindestens begrenzt steuerbar sein. Dies kann sowohl bei der Verwendung von Elektrolyseuren als auch bei der Verwendung von Steam-Reformern zur Herstellung von Wasserstoff erreicht werden.

Es ist zweckmäßig, die Einheit aus Brennstoffzelle und Gasbrenner beim Endverbraucherum einen Wärmespeicher zu ergänzen. Dieser Wärmespeicher sollte sowohl durch Abwärme der Brennstoffzelle als auch durch Abwärme vom Gaskessel aufladbar sein. Der Wärmespeicher kann zudem eine Elektroheizung aufweisen, die sowohl mit Strom aus der Brennstoffzelle als auch mit Strom aus dem allgemeinen Stromnetz betrieben werden kann. Sollte die Versorgung mit Wasserstoff und Erdgas ausfallen, kann die Elektroheizung als Notheizung betrieben werden. Der Wärmespeicher kann in einfacher Ausgestaltung aus einem Wasserkessel bestehen.

Mit Strom aus den Brennstoffzellen kann zudem die Stromversorgung durch das allgemeine Stromnetz stabilisiert werden.

Damit die Gasreinigungsanlage zur Aufbereitung des Erdgases nicht für den Spitzenbedarf ausgelegt werden muss, kann ein Speicher für gereinigtes Erdgas vorgesehen sein, aus dem dann je nach Bedarf gereinigtes Erdgas in das Rohrnetz eingespeist werden kann.

Der Speicher für gereinigtes Erdgas kann sich am Beginn eines Erdgasversorgungsgebiets befinden. Dort findet bedarfsweise zudem die Einspeisung von Erdgas in das abgeschlossene Rohrnetz statt. Wenn das Rohrnetz aufgrund seiner räumlichen Struktur keinen Beginn aufweist, so kann der Beginn des Rohrnetzes durch den Ort des Einspeisens von Erdgas definiert sein, jedenfalls wenn keine weiteren Orte der Einspeisung von Erdgas in das Rohrnetz über das Erdgasversorgungsgebiet verteilt angeordnet sind.

In analoger Weise kann für den, bedarfsweise im Wesentlichen reinen, Wasserstoff ein Speicher vorgesehen sein, der am Beginn eines Wasserstoffversorgungsgebiets angeordnet sein kann. Das Erdgasversorgungsgebiet und das Wasserstoffversorgungsgebiet sind dabei vorzugsweise deckungsgleich. Es kann in Ermangelung eines räumlichen Beginns des Rohrnetzes der Ort der Einspeisung des Wasserstoffs als Beginn des Rohrnetzes angesehen werden, wenn der Wasserstoff nicht an unterschiedlichen Orten über das Wasserstoffversorgungsgebiet verteilt eingespeist wird. Vorzugsweise sind der Ort der Einspeisung des Wasserstoffs und der Ort der Einspeisung des Erdgases identisch. Weitervorzugsweise werden der Wasserstoff und das Erdgas vor der Einspeisung gemischt, so dass das Verhältnis von Wasserstoff zu Erdgas im Rohrnetz überall möglichst gleichmäßig ist.

Die Endverbraucher bzw. deren Haushalte besitzen in der Regel nur Volumenzähler für Gas. Um Umrüstkosten für einen Heizmengenzähler zu vermeiden, kann für eine gegebene Versorgungsperiode ein Mittelwert für den Brennwert gebildet werden. Dieser Mittelwert kann durch Messung der Volumenströme des eingespeisten Wasserstoffs und des eingespeisten Erdgases gebildet werden. Bei ähnlicher Nutzerstruktur kann so eine hinreichend genaue Abrechnung sichergestellt werden. Alternativ können, insbesondere bei größeren Abnehmern, Geräte zur Messung der bezogenen Energiemenge, aufgeschlüsselt in Wasserstoff und Erdgas, installiert sein.

Da schwefelhaltige Odorierungsmittel zu einer Schädigung der Brennstoffzellen der Endverbraucher führen können, kann dem an den Endverbraucher gelieferten Gas ein schwefelfreies Odorierungsmittel etwa auf Acrylatbasis beigemischt werden.

Es ist alternativ oder zusätzlich zweckmäßig, dem Endverbraucher einen Wasserstoffdetektor zur Verfügung zu stellen, der bei Gefahr einen akustischen Alarm auslöst. Zur Erhöhung der Sicherheit kann der Detektor auch die automatische Schließung des Gashauptventils auslösen. Die Gasmischung sollte dann immer soviel Wasserstoff enthalten, dass der Wasserstoffdetektor zuverlässig funktioniert. Der Wasserstofffabrik kann daher ein kleiner zusätzlicher Wasserstofferzeuger beigestellt sein. Das kann ein kleiner Elektrolyseur sein, der einspringt, wenn die große Fabrik ausfällt. Alternativ oder zusätzlich kann ein Wasserstoffspeicher vorgesehen sein. Die Schwellwerte des Wasserstoffdetektors sind dann per Fernsteuerung anzupassen.

Verfahrensmäßig kann vorgesehen sein, gereinigtes Erdgas und Wasserstoff entweder separat oder nach einem vorherigen Mischvorgang in das Rohrnetz einzuspeisen und zu den Endverbrauchern zu transportiern. Bei den Endverbrauchern kann dann je nach Bedarf ein Gemisch aus Wasserstoff und Erdgas aus dem Rohrnetz entnommen werden. Anschließend kann der Wasserstoffanteil des entnommenen Gemischs wenigstens teilweise von wenigstens einer Brennstoffzelle beim Endverbraucher zur Stromerzeugung genutzt werden. Das Gemisch aus Wasserstoff und Erdgas kann nach dem Verlassen der Brennstoffzelle, etwa als erdgasreicheres Abgas der Brennstoffzelle, beim Endverbraucher von jeweils wenigstens einem Gasbrenner zur Wärmeerzeugung genutzt werden. Auf diese Weise kann der Wasserstoffanteil des dem Rohrnetz entnommenen Gases effizient mittels einer Brennstoffzelle in Strom und Wärme umgesetzt werden. Durch den nachgeschalteten Gasbrenner kann noch zusätzliche Wärme durch Verbrennung des Erdgases und bedarfsweise noch vorhandenen Wasserstoffs erzeugt werden.

Alternativ oder zusätzlich kann reiner Wasserstoff an eine Vielzahl von Endverbrauchern geliefert werden, diesem Wasserstoff bei Bedarf gereinigtes Erdgas am Beginn des Erdgasversorgungsgebietes zugemischt werden und bei Bedarf eine Brennstoffzelle vor den Gasbrenner des Endverbrauchers geschaltet werden.

Wird weniger Wärme benötigt, als bei der Bereitstellung des benötigten Stroms auf diese Weise anfallen würde, kann ein Teil des Strombedarfs aus dem angeschlossenen Stromnetz bezogen werden. Wird weniger Strom benötigt, als bei der Bereitstellung der erforderlichen Wärme auf die beschriebene Weise erzeugt wird, kann der überschüssige Strom in das Stromnetz eingespeist werden. Das Gesamtsystem wird also wärmegeführt und nicht wie heute üblich stromgeführt betrieben. Beim stromgeführten Betrieb bleibt häufig ein Teil der bei der Stromerzeugung anfallenden Wärme ungenutzt. Mit anderen Worten kann die Brennstoffzelle netzparallel Betrieb werden. Bei einem Endverbraucher kann so nicht nur von der wenigstens einen Brennstoffzelle erzeugter Strom in das Stromnetz abgegeben werden. Es kann auch Strom zum Betreiben elektrischer Verbraucher beim Endverbraucher aus dem Stromnetz bezogen werden.

Da der Wärmebedarf der Endverbraucher saisonalen Schwankungen unterliegt, kann im Winter ein im Verhältnis zum Wasserstoff höherer Anteil an Erdgas in das Rohrnetz eingespeist werden als im Sommer. Dieser Anteil kann bedarfsweise abhängig von den, insbesondere zu erwartenden, Außentemperaturen gezielt eingestellt werden. In milden Wintern könnte dann der Anteil an Wasserstoff höher sein als an kalten Herbsttagen.

Verfahrensmäßig ist es daher zweckmäßig, wenn der Gasbrenner mit wechselnden Mischungsverhältnissen von Erdgas und Wasserstoff betrieben wird. Dadurch führen saisonale Schwankungen in der Zusammensatzung des eingespeisten Gasgemisches zu keinen nennenswerten Problemen.

Um eine unerwünschte Leckage ohne Hilfsmittel feststellen zu können, kann ein schwefelfreies Odorierungsmittel in das Rohrnetz eingespeist werden. Dies führt nicht wie schwefelhaltige Odorierungsmittel zu einer Schädigung der Brennstoffzellen.

Beim Endverbraucher wird vorzugsweise ein Wärmespeicher betrieben, der über die Abwärme der Brennstoffzelle oder des Gaskessels aufgeladen werden kann. Alternativ oder zusätzlich kann dem Wärmespeicher eine elektrische Heizung zugeordnet sein. Der Wärmespeicher ist mit anderen Worten elektrisch beheizbar. Die elektrische Heizung kann durch von der Brennstoffzelle erzeugten Strom oder durch Netzstrom betrieben werden.

Besonders bevorzugt ist es, die Vielzahl von Brennstoffzellen bei den Endverbrauchern gezielt zur Einspeisung wenigstens eines Teils des Spitzenlaststrombedarfs im Stromnetz zu nutzen. Die Vielzahl von Brennstoffzellen kann also als eine Art Spitzenlastkraftwerk betrieben werden. Durch die Vielzahl von Brennstoffzellen wird eine hohe Versorgungssicherheit gewährleistet. Die Brennstoffzellen können in kürzester Zeit große Mengen Strom in das Stromnetz einspeisen. Die Brennstoffzellen können auch dann nutzbringend betrieben werden, wenn keine Spitzenlast hinsichtlich des Strombedarfs abgedeckt werden muss. Die Brennstoffzellen sind ohnehin vorhanden, so dass der Spitzenlaststrom kostengünstig bereitgestellt werden kann.

Das Einspeisen von Spitzenlaststrom kann zu einer Stabilisierung beim Betrieb des Stromnetzes beitragen. Alternativ oder zusätzlich kann der Betrieb des Stromnetzes aber auch dadurch stabilisiert werden, dass bei einem schnellen und/oder kurzzeitigen Absinken des Strombedarfs bei den Endverbrauchern Strom aus dem Netz entnommen wird. Mit anderen Worten kann zur Umgehung einer Überversorgung des Stromnetzes mit Strom die Leistung der Brennstoffzellen bei den Endverbrauchern gezielt gedrosselt und eine dieser Drosselung entsprechende Menge Strom bei den Endverbrauchern aus dem Stromnetz entnommen werden. Die entsprechende Menge Strom kann dabei der Menge an Strom entsprechen, die durch die Drosselung der Brennstoffzellen von denselben weniger erzeugt wird. Alternativ oder zusätzlich kann die entsprechende Menge Strom aber auch der Menge an Strom entsprechen, die für die Erzeugung der Wärmemenge bei den Endverbrauchern erforderlich ist, die infolge der Drosselung der Brennstoffzellen weniger durch die Brennstoffzellen erzeugt wird.

Die entsprechende Menge an Strom kann, insbesondere bei Verwendung einer zentralen Steuerung, sehr schnell und unkompliziert aus dem Stromnetz entnommen werden. Der Aufwand ist jedenfalls deutlich geringer als etwa die Leistung bestimmter in das Stromnetz eingebundener Kraftwerke an den aktuellen Stromverbrauch anzupassen. Es kann beispielsweise eine möglichst gleichmäßige elektrische Leistung bereitgestellt werden. Droht der Strombedarf kurzzeitig abzufallen, können die Brennstoffzellen der Endverbraucher in ihrer Leistung gedrosselt werden. Zur Bereitstellung einer ausreichenden Wärmemenge beim Endverbraucher kann dann Strom aus dem Stromnetz entnommen werden, mit dem bedarfsweise eine elektrische Heizung zur Erwärmung von Brauchwasser und/oder Wasser der Heizungsanlage betrieben werden kann. Alternativ oder zusätzlich kann der dem Stromnetz entnommene Strom sinnvoll zum Aufheizen eines Wärmespeichers benutzt werden, selbst wenn der Endverbraucher aktuell keinen Wärmebedarf hat. Ist dies zu einem späteren Zeitpunkt der Fall, kann der Endverbraucher jedenfalls teilweise auf die im Wärmespeicher gespeicherte thermische Energie zurückgreifen.

Durch gezieltes, vorzugsweise zentral gesteuertes, Einspeisen und Entnehmen von Strom durch die bei den Endverbrauchern vorgesehenen Einrichtungen kann ein kurzfristiger Anstieg und/oder Abfall der benötigten Leistung des Stromnetzes ausgeglichen werden. Dies führt letztlich zu einer Stabilisierung des Stromnetzes.

Alternativ oder zusätzlich kann vorgesehen sein, dass am Ort der Einspeisung von Wasserstoff und Erdgas der Heizwert und der Volumenstrom des Wasserstoffs und des Erdgases kontinuierlich gemessen werden und daraus der Mittelwert für einen, beispielsweise beliebigen, Zeitraum errechnet wird. Es kann weiter vorgesehen sein, dass dieser Mittelwert jederzeit von den Endverbrauchern und/oder deren Beauftragten per Fernabfrage abgerufen wird.

Vorrichtungsmäßig sind eine abgegrenztes Rohrnetz zur Verteilung von Wasserstoff und gereinigtem Erdgas an Endverbraucher, Einrichtungen zum Einspreisen von Wasserstoff und Erdgas in das Rohrnetz sowie Mittel zur Entnahme eines Gemischs aus Wasserstoff und Erdgas aus dem Rohrnetz bei den Endverbrauchern vorgesehen. Bei jedenfalls einem Teil der Endverbraucher sind wenigstens eine Brennstoffzelle und wenigstens ein Gasbrenner vorhanden.

Es kann zusätzlich aber auch eine Bypassleitung um die Brennstoffzelle herum vorgesehen sein, über die wenigstens ein Teilstrom des dem Rohrnetz entnommenen Gases direkt zum Gasbrenner geleitet werden kann. Dies ist etwa dann zweckmäßig wenn ansonsten ein zu großer Gasstrom durch die Brennstoffzelle geleitet werden müsste um die gewünschte Wärmemenge bereitzustellen.

Als Brennstoffzellen können Polymerelektrolytmembran-Brennstoffzellen vorgesehen sein, die wirtschaftlich zu betrieben sind und auch bei geringen Wasserstoffgehalten den Wasserstoff effizient umsetzen können.

Alternativ oder zusätzlich kann ein Speicher zur Zwischenspeicherung des in das Rohrnetz einzuspeisenden Erdgases vorgesehen ist. Es kann unabhängig von der Verwendung eines solchen Erdgasspeichers auch ein Wasserstoffspeicher vorgesehen sein. Beides erhöht einerseits die Betriebssicherheit und andererseits die Wirtschaftlichkeit.

Damit zeitweise eine erhöhte Wärmeabgabe toleriert werden kann, ohne den Wirkungsgrad bei der Energieerzeugung insgesamt nachhaltig negativ zu beeinflussen kann beim Endverbraucher ein Wärmespeicher vorgesehen sein. Dieser kann Abwärme der Brennstoffzelle und/oder des Gaskessels speichern. Es kann auch über eine elektrische Heizung beheizt werden, wenn dies zum Zwecke einer Erhöhung der Flexibilität des Gesamtsystems wünschenswert ist.

Besonders zweckmäßig ist es, wenn die Brennstoffzellen zur Einspreisung von Strom an ein Stromnetz angeschlossenen sind. So kann überschüssiger Strom, der bei der Wärmeerzeugung entsteht, von einem Endverbraucher an das Stromnetz abgegeben werden. Ein anderer Endverbraucher kann dann Strom aus dem Stromnetz entnehmen, wenn er mehr Strom benötigt, als bei der Bereitstellung der benötigten Wärmemenge anfällt.

Weiter vorzugsweise ist eine beispielsweise zentrale Vorrichtung zur Steuerung der Vielzahl der Brennstoffzellen bei den Endverbrauchern vorgesehen. Diese Steuerung sorgt dann etwa dafür, dass ohne Eingriff der einzelnen Endverbraucher einer bestimmten Strommenge über eine bestimmte Zeitdauer in das Stromnetz eingespeist wird. Auf diese Weise kann einfach und kostengünstig Spitzenlaststrom im Stromnetz zu Verfügung gestellt werden.

Anstelle von fossilem Erdgas oder zusätzlich zu diesem kann auch synthetisches Erdgas in das Rohrnetz eingespeist werden. Das synthetische Erdgas ähnelt dem fossilen Erdgas in seiner Zusammensetzung. Es wird aber nicht aus Lagerstätten im Boden gewonnen, sondern aus nicht fossilen Rohstoffen gewonnen. Als Rohstoffquelle für synthetisches Erdgas kommt beispielsweise aus organischen Abfällen gewonnenes, gereinigtes Biogas in Frage.

Die Erfindung wird nachfolgend anhand einer lediglich Ausführungsbeispiele darstellenden Zeichnung näher erläutert. In der der Zeichnung zeigt
- Fig. 1: ein Ausführungsbeispiel der erfindungsgemäßen Vorrichtung und
- Fig. 2: ein Detail der Vorrichtung gemäß Fig. 1.

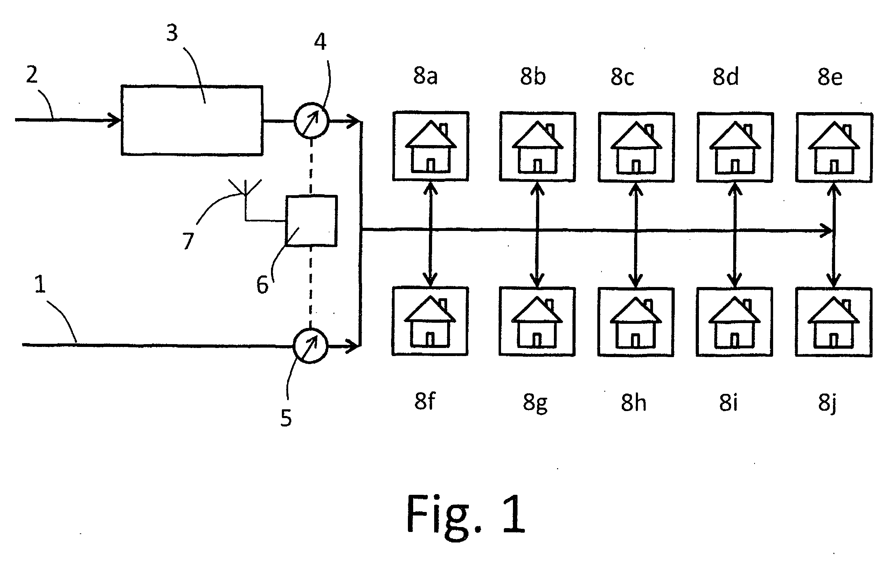

In der Fig. 1 ist ein begrenztes Versorgungsgebiet dargestellt, das mit reinem Wasserstoff 1 und Erdgas 2 versorgt wird. Der Wasserstoff 1 und das Erdgas werden beim dargestellten Ausführungsbeispiel über separate Leitungen in ein Rohrnetz eingespeist, von dem eine Vielzahl von Endverbrauchern 8a bis 8j Gas entnehmen. Die Endverbraucher betreiben mit dem Gas jeweils eine Brennstoffzelle.

Damit die Brennstoffzellen der Endverbraucher, bei denen es sich um alle Arten von Brennstoffzellen handeln kann, problemlos mit dem aus dem Rohrnetz entnommenen Gas betrieben werden können, ist eine Gasreinigung 3 zur Reinigung der Erdgases vorgesehen werden. Die Gasreinigung sollte auf die hohen Anforderungen an das Brenngas der Niedertemperatur-Brennstoffzellen mit Polymerelektrolytmembran ausgelegt werden. In diesem Fall sollten im Wesentlichen alle Schwefelverbindungen entfernt werden. Dies kann durch die Verwendung von Metalloxiden geschehen. Der Anteil des Kohlenmonoxids (CO) des Gasgemischs im Rohrnetz sollte unter 5 ppm liegen. Dies kann über eine selektive Oxidation erreicht werden, bei der auch der Sauerstoff aus dem Erdgas entfernt werden kann.

Die Volumenströme von Wasserstoff 1 und Erdgas 2 werden mit den Messgeräten 4 und 5 erfasst. Eine Recheneinheit 6 erfasst diese Daten und bildet daraus kontinuierlich Mittelwerte, die für einen beliebigen Zeitraum abrufbar sind. Die Daten können beispielsweise über eine Antenne 7 zu jedem Endverbraucher übertragen werden. Die Endverbraucher 8a bis 8j beziehen entweder im Wesentlichen reinen Wasserstoff, gereinigtes Erdgas oder ein Gemisch aus beiden. Bei Ausfall der Wasserstofffabrik werden die Endverbraucher mit gereinigtem Erdgas und Strom aus dem allgemeinen Stromnetz versorgt. Auch eine Komplettversorgung allein mit Strom ist möglich.

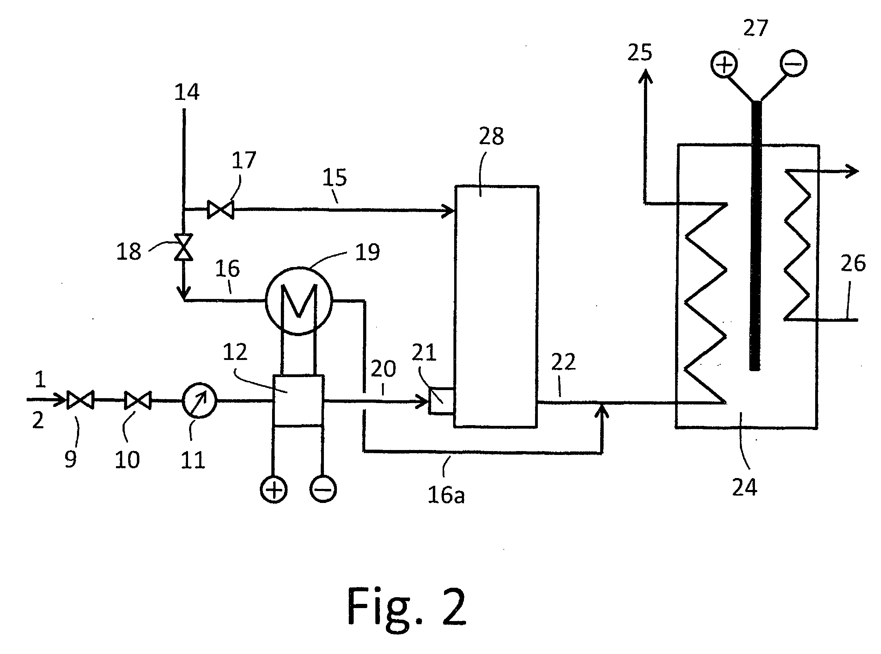

In der Fig. 2 ist eine bei den Endverbrauchern 8a bis 8j vorgesehene Hausinstallation dargestellt. Wasserstoff 1 und gereinigtes Erdgas 2 passiert das mechanische Hauptventil 9 und das von einem Wasserstoffdetektor gesteuerte Ventil 10. Der Volumenstrom des Gases wird von einem Zähler 11 gemessen. Die bezogene Energie wird per Fernabfrage an der Recheneinheit 6 für einen beliebigen Zeitraum festgestellt.

Das Gas gelangt zunächst in eine Brennstoffzelle 12, die den Wasserstoffanteil des Gases weitgehend in Strom und Wärme umwandelt. Der Strom kann selbst genutzt werden oder in das allgemeine Stromnetz eingespeist werden. Solange ein hoher Strombedarf besteht, wird möglichst viel Strom in das allgemeine Stromnetz eingespeist.

Die Wärme aus der Brennstoffzelle 12 wird mittels einem Wärmetauscher 19 an einen Teilstrom 16 des Heizungsrücklaufes 14 übertragen. Der erwärmte Teilstrom 16a bildet zusammen mit dem Teilstrom 22 den Vorlauf 25 der Heizungsanlage. Ein anderer Teilstrom 15 des Rücklaufs 14 gelangt in den Heizkessel 28. Das nicht umgesetzte Gas 20 aus der Brennstoffzelle 12 wird auf einen Universalbrenner 21 geleitet, der dem Heizkessel zugeordnet ist und des Wasser des Heizkessels erwärmt. Der Universalbrenner ist auf beliebige Mischungsverhältnisse von Wasserstoff und Erdgas ausgelegt.

Nicht im Einzelnen dargestellt ist, dass ein Bypassleitung um die Brennstoffzelle geführt sein kann, damit bedarfsweise wenigstens einen Teil des dem Rohrnetz entnommenen Gases unter Umgehung der Brennstoffzelle direkt dem Gasbrenner zugeführten werden kann. Dadurch kann der Gesamtwirkungsgrad gesteigert werden, wenn der einzelne Endverbraucher viel Wärme benötigt und die Gesamtheit der Endverbraucher gleichzeitig einen geringen Strombedarf haben, der bereits anderweitig gedeckt wird.

Das erwärmte Wasser 22 aus dem Heizkessel 28, wird über den Wärmespeicher 24 als Vorlauf 25 für die im Haus installierten Heizkörper genutzt. Der Bedarf an warmem Brauchwasser wird über eine Leitung 26 befriedigt, die durch den Wärmespeicher geführt ist und so eine Erwärmung des Brauchwassers ermöglicht. Die Stellung der Ventile 17 und 18 ist abhängig von der Leistung der Brennstoffzelle 12 und der Leistung des Heizkessels 28. Die elektrische Heizung 27 im Wärmespeicher 24 kann von der Brennstoffzelle 12 oder dem allgemeinen Stromnetz gespeist werden.

Das beschriebene Verfahren eignet sich für den Übergang zu einer solaren Wasserstoffwirtschaft, die prinzipiell keine Verluste kennt. Durch den Stromüberschuss, der mit dem erfindungsgemäßen Verfahren erzeugt werden kann, kann der Neubau von thermischen Kraftwerken vermieden werden. Die beschriebene dezentrale Stromerzeugung von den Endverbrauchern kann auch zur Stabilisierung des Stromnetzes genutzt werden, indem das Verhältnis von Strom- und Wärmerzeugung mit hoher Dynamik, d.h. sehr schnell, geändert werden kann. Durch die Nutzung von Wasserstoff und Erdgas in einem abgegrenzten Versorgungsgebiet und der Netzparallelität zum allgemeinen Stromnetz, entsteht ein Versorgungssystem mit hoher Redundanz, auch beim Betrieb von nur einer Wasserstofffabrik im Versorgungsgebiet.

Wasserstoff kann aus allen Energien hergestellt werden. Am kostengünstigsten ist die Herstellung von Wasserstoff aus Biomasse mittels Steam-Reforming. Allein das Potenzial der Biomasse würde ausreichen, alle atomaren und fossilen Energien in den meisten Ländern zu ersetzen. Es wird also einen Weg zum Einstieg in eine Wasserstoffwirtschaft aufgezeigt, bei dem der Wasserstoff zum Endverbraucher geliefert und per Definition verlustfrei umgewandelt werden kann.

## Patentansprüche

1. Verfahren zur Nutzung von über ein abgegrenztes Rohrnetz bereitgestelltem Wasserstoff mittels bei Endverbrauchern vorgesehenen Brennstoffzellen,
- bei dem gereinigtes Erdgas und Wasserstoff in das Rohrnetz eingespeist und zu den Endverbrauchern transportiert werden,
- bei dem bei den Endverbrauchern ein Gemisch aus Wasserstoff und Erdgas aus dem Rohrnetz entnommen wird,
- bei dem unter Verzicht einer Reformierung der Wasserstoffanteil des Gemischs bei den Endverbrauchern wenigstens teilweise von jeweils wenigstens einer Brennstoffzelle zur Stromerzeugung genutzt wird und
- bei dem das Gemisch aus Wasserstoff und Erdgas nach dem Verlassen der Brennstoffzelle bei den Endverbrauchern von jeweils wenigstens einem Gasbrenner zur Wärmeerzeugung genutzt wird.

2. Verfahren nach Anspruch 1,
bei dem im Winter ein im Verhältnis zum Wasserstoff höherer Anteil an Erdgas in das Rohrnetz eingespeist wird als im Sommer.

3. Verfahren nach Anspruch 1 oder 2,
bei dem das Verhältnis von Wasserstoff zu Erdgas des in das Rohrnetz eingespeisten Gasgemischs in Abhängigkeit von den, insbesondere zu erwartenden, Außentemperaturen eingestellt wird.

4. Verfahren nach einem der Ansprüche 1 bis 3,
bei dem der Gasbrenner mit wechselnden Mischungsverhältnissen von Erdgas und Wasserstoff betrieben wird.

5. Verfahren nach einem der Ansprüche 1 bis 4,
bei dem ein schwefelfreies Odorierungsmittel in das Rohrnetz eingespeist wird.

6. Verfahren nach einem der Ansprüche 1 bis 5,
bei dem beim Endverbraucher ein Wärmespeicher elektrisch, über die Brennstoffzelle und/oder über den Gasbrenner geladen wird.

7. Verfahren nach einem der Ansprüche 1 bis 6,
bei dem die Brennstoffzellen bei den Endverbrauchern gezielt zur Einspeisung wenigstens eines Teils des Spitzenlaststrombedarfs im Stromnetz betrieben werden.

8. Verfahren nach einem der Ansprüche 1 bis 7,
bei dem zur Umgehung einer Überversorgung des Stromnetzes mit Strom die Leistung der Brennstoffzellen bei den Endverbrauchern gezielt gedrosselt wird und bei dem bei den Endverbrauchern eine entsprechende Menge Strom aus dem Stromnetz entnommen wird.

9. Vorrichtung zur Nutzung von über ein abgegrenztes Rohrnetz bereitgestelltem Wasserstoff (1) mittels bei Endverbrauchern (8) vorgesehenen Brennstoffzellen (12), insbesondere gemäß einem Verfahrens nach einem der Ansprüche 1 bis 8,
- mit einem abgegrenzten Rohrnetz zur Verteilung von Wasserstoff (1) und gereinigtem Erdgas (2) an Endverbraucher (8),
- mit Einrichtungen zum Einspreisen von Wasserstoff (1) und Erdgas (2) in das Rohrnetz und
- mit Mitteln zur Entnahme eines Gemischs aus Wasserstoff (1) und Erdgas (2) aus dem Rohrnetz bei den Endverbrauchern (8),
- wobei bei den Endverbrauchern (8) jeweils eine Brennstoffzelle (12) und ein Gasbrenner (21) vorgesehen sind und
- wobei die Brennstoffzelle (12) derart zwischen den Gasbrenner (21) und das Rohrnetz geschaltet ist, dass ein dem Rohrnetz entnommenes Gemisch aus Wasserstoff (1) und Erdgas (2) unter Verzicht auf einen Reformer nach dem Verlassen der Brennstoffzelle (12) vom Gasbrenner (21) zur Wärmeerzeugung genutzt wird.

10. Vorrichtung nach Anspruch 9,
**dadurch gekennzeichnet,**
**dass** als Brennstoffzellen (12) solche mit Polymerelektrolytmembranen vorgesehen sind.

11. Vorrichtung nach Anspruch 9 oder 10,
**dadurch gekennzeichnet,**
**dass** ein Speicher zur Zwischenspeicherung des in das Rohrnetz einzuspeisenden Erdgases (2) vorgesehen ist.

12. Vorrichtung nach einem der Ansprüche 9 bis 11,
**dadurch gekennzeichnet,**
**dass** beim Endverbraucher (8) ein Wärmespeicher (24) vorgesehen ist, der elektrisch, über die Brennstoffzelle (12) und/oder über den Gasbrenner (21) beheizbar ist.

13. Vorrichtung nach einem der Ansprüche 9 bis 12,
**dadurch gekennzeichnet,**
**dass** die Brennstoffzellen (12) zur Einspeisung von Strom an ein Stromnetz angeschlossenen sind.

14. Vorrichtung nach Anspruch 13,
**dadurch gekennzeichnet,**
**dass** eine Vorrichtung zur Steuerung der Brennstoffzellen (12) bei den Endverbrauchern (8) zur Einspeisung einer bestimmten Strommenge in das Stromnetz vorgesehen ist.

15. Vorrichtung nach Anspruch 14,
**dadurch gekennzeichnet,**
**dass** die Vorrichtung dazu ausgebildet ist, durch Einspeisung von entsprechenden von den Brennstoffzellen der Endverbraucher bereitgestellten Strommengen pro Zeitintervall Spitzen des Strombedarfs abzudecken.

## Claims

1. Method for utilising hydrogen supplied via a demarcated pipe network, by means of fuel cells provided at end users,
- in which purified natural gas and hydrogen are fed into the pipe network and are transported to the end users,
- in which a mixture of hydrogen and natural gas is removed from the pipe network at the end users,
- in which with omission of a reforming stage the hydrogen fraction of the mixture at the end users is at least partly utilised by in each case at least one fuel cell in order to generate current, and
- in which the mixture or hydrogen and natural gas after leaving the fuel cells at the end users is utilised by in case each at least one gas burner in order to generate heat.

2. Method according to claim 1, in which in winter a higher proportion of natural gas in relation to hydrogen is fed into the pipe network than in the summer.

3. Method according to claim 1 or 2, in which the ratio of hydrogen to natural gas of the gas mixture fed into the pipe network is adjusted depending on the particularly to be expected external temperatures.

4. Method according to claims 1 to 3, in which the gas burner is operated with varying mixture ratios of natural gas and hydrogen.

5. Method according to one of claims 1 to 4, in which a sulphur-free odourisation agent is fed into the pipe network.

6. Method according to one of claims 1 to 5, in which at the end user a heat reservoir is electrically charged via the fuel cell and/or via the gas burner.

7. Method according to one of claims 1 to 6, in which the fuel cells at the end users are operated specifically in order to supply at least part of the peak load current requirement in the power network.

8. Method according to claims 1 to 7, in which in order to avoid an overloading of the power network with current, the output of the fuel cells at the end users is selectively throttled, and in which a corresponding amount of current is withdrawn from the power network at the end users.

9. Device for utilising hydrogen (1) supplied via a demarcated pipe network, by means of fuel cells (12) provided at end users (8), in particular in accordance with a method according to one of claims 1 to 8,
- with a demarcated pipe network for distributing hydrogen (1) and purified natural gas (2) to end users (8),
- with devices for injecting hydrogen (1) and natural gas (2) into the pipe network and
- with means for removing a mixture of hydrogen (1) and natural gas (2) from the pipe network at the end users (8),
- wherein at the end users (8) in each case a fuel cell (12) and a gas burner (21) are provided, and
- wherein the fuel cell (12) is switched between the gas burner (21) and the pipe network in such a way that a mixture of hydrogen (1) and natural gas (2) removed from the pipe network is utilised, with omission of a reformer, after leaving the fuel cell (12) by the gas burner (21) in order to generate heat.

10. Device according to claim 9, **characterised in that** as fuel cells (12) those with polymer electrolyte membranes are provided.

11. Device according to claim 9 or 10, **characterised in that** a reservoir is provided for the intermediate storage of the natural gas (2) fed into the pipe network.

12. Device according to one of claims 9 to 11, **characterised in that** at the end user (8) a heat reservoir (24) is provided, which can be electrically heated via the fuel cell (12) and/or via the gas burner (21).

13. Device according to one of claims 9 to 12, **characterised in that** the fuel cells (12) are connected to a power network in order to feed in current.

14. Device according to claim 13, **characterised in that** a device for controlling the fuel cells (12) at the end users (8) is provided in order to feed a specific amount of current into the power network.

15. Device according to claim 14, **characterised in that** the device is designed so as to cover peaks in current demand by feeding in per time interval corresponding amounts of current supplied by the fuel cells of the end users.

## Revendications

1. Procédé d'exploitation d'hydrogène fourni par l'intermédiaire d'un réseau de canalisations délimité au moyen de cellules de combustible prévues chez les consommateurs finaux,
- dans lequel du gaz naturel purifié et de l'hydrogène sont alimentés dans le réseau de canalisations et sont transportés vers les consommateurs finaux,
- dans lequel chez les consommateurs finaux un mélange d'hydrogène et de gaz naturel est prélevé du réseau de canalisations,
- dans lequel on utilise au moins une partie de respectivement au moins une cellule de combustible en renonçant à un reformage de la fraction d'hydrogène du mélange chez les consommateurs finaux, pour produire de l'électricité et
- dans lequel le mélange d'hydrogène et de gaz naturel après avoir quitté la cellule de combustible est exploité chez les consommateurs finaux par respectivement au moins un brûleur de gaz pour produire de la chaleur.

2. Procédé selon la revendication 1,
dans lequel en hiver une fraction plus grande qu'en hiver de gaz naturel par rapport à l'hydrogène est alimentée dans le réseau de canalisations.

3. Procédé selon les revendications 1 ou 2,
dans lequel le rapport de l'hydrogène au gaz naturel du mélange de gaz alimenté dans le réseau de canalisations est réglé en fonction des températures extérieures, notamment celles escomptées.

4. Procédé selon une des revendications 1 à 3,
dans lequel le brûleur de gaz est mis en fonctionnement avec des rapports de mélange variables de gaz naturel et d'hydrogène.

5. Procédé selon une des revendications 1 à 4,
dans lequel un moyen d'odorisation exempt de soufre est alimenté dans le réseau de canalisations.

6. Procédé selon une des revendications 1 à 5,
dans lequel chez le consommateur final un accumulateur de chaleur est chargé électriquement par l'intermédiaire de la cellule de combustible et/ou du brûleur de gaz.

7. Procédé selon une des revendications 1 à 6,
dans lequel les cellules de combustible chez les consommateurs finaux sont mises en fonctionnement de manière ciblée afin d'alimenter au moins une partie du besoin en électricité en pointe de charge dans le réseau d'électricité.

8. Procédé selon une des revendications 1 à 7,
dans lequel afin d'éviter une suralimentation du réseau d'électricité en courant, la puissance des cellules de combustible chez les consommateurs finaux est bridée de manière ciblée et dans lequel chez les consommateurs finaux une quantité correspondante d'électricité est prélevée dans le réseau d'électricité.

9. Dispositif d'exploitation d'hydrogène (1) fourni par l'intermédiaire d'un réseau de canalisations délimité au moyen de cellules de combustible (12) prévues chez les consommateurs finaux (8), notamment conformément à un procédé selon une des revendications 1 à 8,
- comportant un réseau de canalisations délimité pour distribuer de l'hydrogène (1) et du gaz naturel purifié (2) au consommateur final (8),
- comportant des dispositifs pour alimenter de l'hydrogène (1) et du gaz naturel (2) dans le réseau de canalisations et
- comportant des moyens pour prélever un mélange d'hydrogène (1) et de gaz naturel (2) dans le réseau de canalisations chez les consommateurs finaux (8),
- dans lequel chez les consommateurs finaux (8) respectivement une cellule de combustible (12) et un brûleur de gaz (21) sont prévus et
- dans lequel la cellule de combustible (12) est branchée entre le brûleur de gaz (21) et le réseau de canalisations de telle sorte qu'un mélange d'hydrogène (1) et de gaz naturel (2) prélevé dans le réseau de canalisations est exploité par le brûleur de gaz (21) pour produire de la chaleur en renonçant à un reformage après avoir quitté la cellule de combustible (12).

10. Dispositif selon la revendication 9,
**caractérisé en ce que**
comme cellules de combustible (12) sont prévues des cellules de combustible pourvues de membranes d'électrolytique polymère.

11. Dispositif selon les revendications 9 ou 10,
**caractérisé en ce que**
un accumulateur est prévu à des fins d'alimentation intermédiaire du gaz naturel (2) à alimenter dans le réseau de canalisations.

12. Dispositif selon une des revendications 9 à 11,
**caractérisé en ce que**
chez le consommateur final (8) un accumulateur de chaleur (24) est prévu, lequel peut être chauffé électriquement par l'intermédiaire de la cellule de combustible (12) et/ou du brûleur de gaz (21).

13. Dispositif selon une des revendications 9 à 12,
**caractérisé en ce que**
les cellules de combustible (12) pour l'alimentation en électricité sont raccordées à un réseau d'électricité.

14. Dispositif selon la revendication 13,
**caractérisé en ce que**
un dispositif de commande des cellules de combustible (12) est prévu chez les consommateurs finaux (8) afin d'alimenter une quantité d'électricité déterminée dans le réseau d'électricité.

15. Dispositif selon la revendication 14,
**caractérisé en ce que**
le dispositif est conçu afin de couvrir des pointes de besoin en électricité, en alimentant des quantités d'électricité par intervalle de temps fournies de manière correspondante par les cellules de combustible du consommateur final.
